# EUROPEAN PATENT APPLICATION

(11) **EP 3 536 390 A1**
(43) Date of publication of application: **11.09.2019**
(21) Application number: 17866690.5
(22) Date of filing: 30.10.2017
(51) Int. Cl.: B01D 3/00

(54) **GRADIENT SUB-BOILING DISTILLER**

(30) Priority: 04.11.2016 CN 201610992413
(71) Applicant: Hefei Jiaxiao Technology Co., Ltd., Economic and Technological Development Area Hefei, Anhui 230601 (CN)
(72) Inventor: LIU, Fei, Hefei, Anhui 230088 (CN)
(74) Representative: Keil & Schaafhausen Patent- und Rechtsanwälte PartGmbB
(86) International application number: PCT/CN2017/000648
(87) International publication number: WO 2018/082199

(57) **Abstract**

The present invention discloses a gradient sub-boiling distiller and a distillation method. The gradient sub-boiling distiller includes a condensation pipe, an evaporation surface, a heating device, a liquid distributor, a tail liquid trough, a condensate trough, a tail liquid pipe, a liquid inlet pipe, a condensate pipe, and a shell. A raw material liquid is preheated through the condensation pipe, flows down from the evaporation surface after being further preheated in the heating device, and is continuously evaporated. With the temperature continuously decreasing, vapor condenses on the surface of the condensation pipe, the heat of condensation preheats the raw material liquid in the condensation pipe, and the flow direction of the raw material liquid in the condensation pipe is opposite to that on the evaporation surface.The present invention completely recovers the heat of condensation, increases the energy efficiency, reduces water for water-cooling, saves water resources and reduces energy consumption.

## Description

### TECHNICAL FIELD

The present invention relates to the field of liquid distillation and purification or concentration, and in particular, to a liquid distillation, purification and concentration apparatus and method.

### BACKGROUND

Existing distillation techniques, including distilled water production, seawater desalination, and liquid concentration, are multi-effect distillation techniques generally adopted to conserve energy. High temperature and high pressure are required, and the apparatus is complicated. The energy efficiency is limited by the number of stages of the apparatus, and generally, the distillation concentration only achieves the energy efficiency of level 2-3. Sub-boiling distillation has the advantage of less impurities of condensate water, and thus it is used for water preparation where the requirement for water quality is high. Firstly, the current sub-boiling distiller can only be used for the preparation of laboratory water due to its low output, and secondly, the energy efficiency is low and is far below the energy efficiency of level 1, the energy waste is serious, and the condensation wastes a lot of water resource.

### SUMMARY

An objective of the present invention is to provide a liquid distillation apparatus and a distillation method to solve the problems of the prior art.

To achieve the foregoing objective, the present invention adopts the following technical solution:
A gradient sub-boiling distiller, including at least one condensation pipe, at least one evaporation surface, a heating device, a liquid distributor, a tail liquid trough, a condensate trough, a tail liquid pipe, a liquid inlet pipe, a condensate pipe, and a shell, where one end of the heating device is communicated with the liquid distributor, and the other end is communicated with the condensation pipe; one end of the evaporation surface is connected to the liquid distributor, and the other end is provided with the tail liquid trough; the tail liquid trough is communicated with the tail liquid pipe; one end of the condensation pipe is communicated with the liquid inlet pipe, and the other end is communicated with the heating device; and the condensate trough is located at one end of the condensation pipe and is communicated with the condensate pipe.

The gradient sub-boiling distiller is characterized in that: the distiller further includes a pump, and an inlet and an outlet of the pump are respectively communicated with the tail liquid pipe and the liquid inlet pipe through a circulation pipe.

The gradient sub-boiling distiller is characterized in that: the distiller further includes a heat exchanger disposed on the tail liquid pipe, the condensate pipe, and the liquid inlet pipe.

The gradient sub-boiling distiller is characterized in that: the circulation pipe further includes a cooling device.

The gradient sub-boiling distiller is characterized in that: the liquid inlet pipe is connected to a pipe between the condensation pipe and the heating device or a pipe between the liquid distributor and the heating device.

The gradient sub-boiling distiller is characterized in that: the distiller further includes a device connected to the evaporation surface to periodically move the evaporation surface relative to the condensation pipe.

The gradient sub-boiling distiller is characterized in that: the distiller further includes a gas generator, a gas storage tank, an air extractor, or an air compressor communicated with the shell through a pipe.

The gradient sub-boiling distiller is characterized in that: the distiller further includes a fan, and an inlet and an outlet of the fan are communicated with the shell.

The gradient sub-boiling distiller is characterized in that: the condensation pipe is made of a polymer material or a composite material thereof, and has a longitudinal partition plate inside; holes partitioned by the partition plate are communicated with liquid passages at both ends of the condensation pipe, and protrusions are formed on a surface of the condensation pipe; the evaporation surface and the condensation pipe are arranged at intervals; the protrusions on the surface of the condensation pipe support and compress the evaporation surface; the protrusions on the surface of the condensation pipe include columnar or tapered protrusions, inclined columnar or tapered protrusions, and longitudinal strip-shaped protrusions; and longitudinal strip-shaped protrusions of a guide trough, located at one end of the evaporation surface and lower than one end of the condensation surface, are formed on the side surface.

The gradient sub-boiling distiller is characterized in that: the evaporation surface is omitted, and the raw material liquid is dripped or sprayed from the liquid distributor.

According to the technical solution of the present invention, the raw material liquid enters the condensation pipe and flows from one end of the condensation pipe to the other end. Meanwhile, the liquid vapor condenses on an outer surface of the condensation pipe, and the heat of condensation causes the temperature of the raw material liquid in the pipe to continuously rise, and finally the liquid enters the heating device to be further heated, and the temperature rises. The heated liquid is distributed to the evaporation surface and flows to the other end of the evaporation surface while continuously evaporating; with the temperature continuously decreasing, the liquid vapor condenses on the condensation pipe, so that the liquid in the condensation pipe is continuously heated. Since the water flow rate on the evaporation surface is equal to that in the condensation pipe, the temperature, that decreases when the high-temperature liquid flows from one end of the evaporation surface to the other end, is a temperature that rises after the liquid passes through the condensation pipe.

For example, tap water of 20°C enters the condensation pipe from a water inlet pipe, is preheated to 90°C in the condensation pipe, and is finally heated to 100°C in the heating device, then is distributed to the evaporation surface through the water distributor, and begins to evaporate; with the temperature of water flowing to a bottom end of the evaporation surface continuously decreasing, the final decrease amplitude is basically equal to the increase amplitude of the water temperature in the condensation pipe (the temperature drop is basically caused by evaporation and heat dissipation, and the contact heat transfer ratio is extremely small), and when the temperature decreases to 30°C, the water is discharged. In this process, the externally supplied heat is to heat the water by 10°C, and the corresponding heat of the evaporated (or condensed) vapor is to cool the water by 70°C, and thus the energy efficiency of the system is about level 7.If the inlet water flow rate is adjusted so that the water is preheated to 95°C, and the temperature decreases to 25°C after the water is evaporated from the evaporation surface, the energy efficiency of the apparatus is about level 14.

To increase the yield, the liquid can be evaporated at a higher temperature, so that the final temperature of the liquid after evaporation increases. Therefore, a heat exchanger is added to the system for heat exchange between the tail liquid, the condensate and the feed liquid.

To save water or concentrate the extract, the tail liquid is recovered by the pump for circulation, that is, the liquid that is not completely evaporated and flows down from the evaporation surface is partially collected by the tail liquid trough, and then pumped into the circulation pipe by the pump, and is partially discharged from the tail liquid pipe while an appropriate amount of raw material liquid is replenished by the liquid inlet pipe. The raw material liquid is mixed into the circulating liquid to lower the temperature of the circulating liquid, so that the vapor evaporated on the evaporation surface can condense when entering the condensation pipe again. To increase the yield, the circulating liquid can be cooled to increase the temperature difference between the evaporation surface and an outer wall of the condensation pipe. Moreover, to increase the thermal efficiency, the temperature difference between the evaporation surface and the condensation pipe wall is reduced. For example, heat exchange is performed on the discharged tail liquid, the condensate, and the raw material liquid entering the apparatus to preheat the raw material liquid entering the apparatus.

If the temperature of the raw material liquid is high and requires distillation and purification or concentration, the replenished raw material liquid can be directly introduced from a pipe between the heating device and the liquid distributor or a pipe between the heating device and the condensation pipe, and the heating device does not heat the circulating liquid, and meanwhile, the circulating liquid evaporated from the evaporation surface can be cooled.

The evaporation surface is periodically moved relative to the condensation pipe to drive gas movement between the evaporation surface and the condensation pipe, thereby promoting the evaporation-condensation process to improve the yield. A moving device can be connected to the evaporation surface to move the evaporation surface periodically., rotation, a reciprocating motion in a direction perpendicular to the surface of the condensation pipe, and a reciprocating motion in a direction parallel to the surface of the condensation pipe. For example, the evaporation surface is fixed on a shaft. The shaft is connected to a motor and a crankshaft connecting rod, and the motor drives the evaporation surface to reciprocate. The evaporation surface is made into a cylindrical shape, and is provided with a shaft at the center. The shaft is connected to the motor, and the condensation pipe is distributed around the evaporation surface. The motor drives the evaporation surface to rotate, and meanwhile, an insert member such as a twisted tape or a spring can be disposed on the evaporation surface to increase gas movement.

The gradient sub-boiling distiller may be provided with a gas generator, a gas storage tank, an air extractor or an air compressor to change the atmosphere or pressure inside the shell. The gas generator is utilized to generate the required gas or the gas storage tank is utilized to store the required gas, and the gas is filled into the shell through a pipe and can be continuously or intermittently filled. For example, a storage tank containing nitrogen is communicated with the shell to fill the shell with nitrogen. For example, when the raw material liquid is unstable in the air, the device may be filled with an inert gas such as nitrogen, argon or carbon dioxide or a mixed gas thereof. To reduce the content of oxygen or carbon dioxide in the condensate, nitrogen may be filled. To increase the yield or energy efficiency, a gas such as hydrogen or helium can be filled. The filled gas may also be a mixed gas of various gases or a mixed gas containing the raw material liquid vapor.

The pressure of the gas inside the gradient sub-boiling distiller may be less than the atmospheric pressure to accommodate low-temperature distillation or concentration. For example, the pressure can be from 0.01 to 0.9 atm. In this case, on the one hand, the pressure can be realized by adding an air extractor to pump a gas from the system, or by increasing the airtightness of the system; and the system maintains operation at a lower air pressure after air pumping, or operates in both ways simultaneously. In addition, the gradient sub-boiling distiller may also include the air compressor so that the internal pressure of the apparatus is greater than the atmospheric pressure, thereby increasing the final heating temperature of the liquid to improve the energy efficiency. For example, the internal air pressure of the apparatus is increased so that the water can be heated to 120°C.

The gradient sub-boiling distiller may include a fan, preferably a cross-flow fan. The air inlet and outlet of the fan are respectively connected to the shell. When the fan is working, the air is sucked from the shell and then blown into the shell to cause the flow thereof, to promote the evaporation and condensation process, thereby improving the yield or energy efficiency. The impeller axis of the cross-flow fan is parallel to the evaporation surface, reducing mixing of the upper layer of high-temperature gas and the lower layer of low-temperature gas.

A device for fixing the evaporation surface or separating the evaporation surface from the condensation pipe is disposed between the evaporation surface and the condensation pipe of the gradient sub-boiling distiller, including a bracket, a pillar, etc., and preferably, a portion in contact with the condensation pipe is higher than a portion in contact with the evaporation surface e.g., a spring fixed on the evaporation surface or the condensation pipe, an L-shaped object with one end fixed on the condensation pipe, a columnar object, a cross bar (which is fixed on the condensation pipe by the pillar with both ends perpendicular thereto, the cross bar is parallel to the surface of the condensation pipe and spaced apart at a certain distance, preferably the cross bar is horizontally disposed, and a portion in contact with the condensation pipe is higher than the cross bar), an inverted V-shaped and U-shaped bracket (where both ends of the V-shape and U-shape are respectively in contact with the evaporation surface and the condensation pipe, and since the middle part is higher than the contact portion, the raw material liquid does not flow to the surface of the condensation pipe), or a bracket of a V-shaped or U-shaped cross section formed by rolling a strip-shaped mesh.

The evaporation surface of the gradient sub-boiling distiller can be omitted, the liquid is only distributed, dripped or sprayed by the liquid distributor, and is evaporated in the falling process, and the evaporated tail liquid falls into the tail liquid trough. For example, the liquid distributor is a pipe with a plurality of small holes, the liquid drops from the small holes, and evaporates and falls into the tail liquid trough.

The gradient sub-boiling distiller may have a plurality of or only one of the tail liquid trough and the condensate trough, that is, each evaporation surface (condensation pipe) may be equipped with a tail liquid trough (condensate trough), or a plurality of evaporation surfaces (condensation pipes) share a tail liquid trough (condensate trough).

The condensation pipe of the gradient sub-boiling distiller can be made of a polymer material or a composite material thereof, and has a longitudinal partition plate inside, and the partition plate functions to increase the strength of the condensation pipe and save materials. Protrusions are formed on the surface of the condensation pipe to support and fix the evaporation surface. The protrusions include, but not limited to, columnar or tapered protrusions, inclined columnar or tapered protrusions, and longitudinal strip-shaped protrusions. Longitudinal strip-shaped protrusions of a guide trough are formed on the side surface.

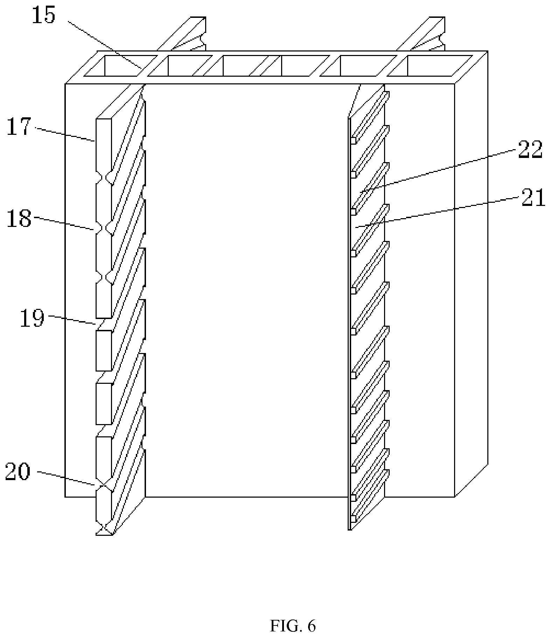

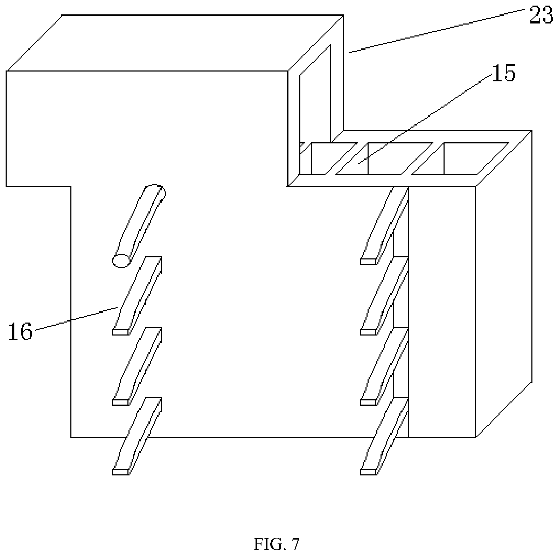

The protrusions may be columnar, such as a cylinder, a square column, and a prism. The columnar protrusions may be inclined relative to the surface. When the condensation pipe is disposed vertically, the top ends of the columnar protrusions are lower than the base portion, so that the raw material liquid on the evaporation surface does not flow upward into the condensate, and the condensate generated on the columnar protrusions or the condensate flowing to the columnar protrusions from the surface of the condensation pipe also cleans the columnar protrusions and finally flows into the raw material liquid, without contaminating the condensate. The protrusions may also be longitudinal strip-shaped, for example, strips having a rectangular, semi-circular, or triangular cross section, etc., the top ends of which are in contact with and support the evaporation surface, and the base portion is connected to the surface of the condensation pipe. A guide trough inclined relative to the condensation surface is disposed on the side surface, and one end of the guide trough at the evaporation surface is lower than the end at the condensation surface. In this way, the liquid on the evaporation surface is collected into the guide trough while flowing toward the condensation surface and flows back to the evaporation surface along the guide trough, and the condensate generated on the protrusions also flows along the guide trough, and cleans the protrusions, so that the raw material liquid does not contaminate the condensate, as shown in FIGS. 6 and 7.

The guide trough may be a trough on the surface of the protrusion, a trough formed by ridges on the side surface of the protrusion and the side surface of the protrusion, and a gap formed after the protrusion is cut (or expressed as a gap between the protrusions).

The liquid distributor is a device configured to cause the liquid to flow to the evaporation surface, and it is preferable to uniformly distribute the liquid on one end of the evaporation surface. The device may simply be a pipe or a pipe orifice through which the liquid flows into or falls onto the evaporation surface, or a pipe having a plurality of small holes on the wall, or a pipe having a longitudinal slit on the wall.

The main function of the condensation pipe according to the present invention is to condense vapor by its outer surface and transfer heat by the pipe wall, and meanwhile, the inner space allows a liquid to pass through, and thus the condensation pipe is not limited to a pipe having a cross section of similar length diameter and width diameter. The shape of the pipe wall may be any shape as long as it can be used for heat transfer and condensation, and may be regular or irregular shapes such as an arc surface, a flat surface or a surface having fins.

A tubular object with a relatively large and flat outer surface and a relatively small internal space is preferred to accumulate less liquid internally. The cross section of the pipe may be circular, rectangular, elongated (a rectangle with a length much greater than a width), oval (a circle or ellipse with a length greater than a width), etc., such as a circular pipe or a rectangular pipe. A pipe having a flat cross section is preferred, for example, a rectangular or elliptical pipe having a cross section of 2-10 mm in width and 20-1,000 mm in length.

A plurality of circular pipes or square pipes are arranged, for example, a plurality of stainless steel square pipes of 10 mm × 20 mm are arranged in parallel.

The material of the pipe wall may be metal, polymer material, inorganic material or the like.

The outer surface of the condensation pipe can be properly treated to infiltrate or not to infiltrate with the condensate, such as hydrophilic treatment, so that the condensate flows down in the form of a film, reducing the possibility that the condensate droplets mix with the raw material liquid to contaminate the condensate. Meanwhile, the distance between the evaporation surface and the condensation pipe is also reduced to save space, increase the yield or energy efficiency.

The evaporation surface of the present invention is a device for expanding the liquid distribution and maximizing the superficial area thereof to facilitate evaporation, and meanwhile, the liquid flows through the surface and pores thereof, and it is preferable that the evaporation surface is well-affined with the liquid to be treated, to facilitate expansion of the liquid on the surface of the evaporation surface. A skeleton and/or an outer frame can be used to tension and level softer materials.

The evaporation surface includes, but not limited to, the following materials (or including the skeleton or the outer frame):
a fiber braided fabric, such as a fiberglass cloth or felt, a silica cloth or felt, a rock wool cloth or felt or plate, and a stainless steel fiber cloth or felt;
a mesh constituted by filaments or fibers made of various materials, such as one or more layers of 40-150 mesh hydrophilization-treated stainless steel mesh; and
a plate or a perforated plate, such as a hydrophilization-treated stainless steel plate, a glass plate, and a ceramic plate.

For example, the evaporation surface is prepared by two layers of degreased fiberglass clothes (pores among the fiberglass cloth layers can diffuse the liquid well) and the outer frame, and a trough having a V-shaped cross section is disposed at the top of the evaporation surface (or the outer wall of the trough is covered with the fiberglass cloth), and the liquid enters the trough through the liquid distributor, and then overflows from a notch and falls onto the evaporation surface (or enters the evaporation surface by the fiberglass cloth of the trough wall).

Preferably, the evaporation surface and the condensation surface of the condensation pipe have the same shape and equal area, and the evaporation surface is disposed in parallel to the condensation pipe.

When the system includes a plurality of condensation pipes and evaporation surfaces, the evaporation surfaces and the condensation pipes are preferably arranged at intervals, and two surfaces of each evaporation surface are distributed with liquid for realizing evaporation.

The heating device according to the present invention is a device for increasing the temperature of the liquid, and may use an electric heating method, as well as a vapor heating method, a waste heat recovery method, etc., such as an electric heating plate, an electric heating pipe, and a heat exchanger. For a distillation apparatus with smaller yield, electrical heating is preferred, and for an apparatus with larger yield, vapor heating is preferred.

In addition, the heating device is disposed inside or outside the shell to heat the liquid to a certain temperature, for example, the heating device is an electric heating pipe and is disposed inside or outside a raw material liquid pipe in the shell, or disposed inside or outside a raw material liquid pipe outside the shell to heat the raw material liquid.

The condensation pipe is disposed opposite to the evaporation surface, and preferably the outer surface of the condensation pipe is parallel to the evaporation surface to facilitate the evaporation-condensation process. The evaporation surface and the condensation pipe may be at a certain angle to the vertical surface, and preferably, disposed vertically to facilitate the flow of liquid from the evaporation surface and the flow of the condensate from the outer surface of the condensation pipe without accumulation.

For a distiller manufactured according to the technical solution of the present invention, the distance between the evaporation surface and the surface of the condensation pipe is adjusted (both surfaces are flat surfaces and arranged in parallel), when the distances are respectively 3 mm, 7 mm, and 20 mm, the yield and energy efficiency at 7 mm is slightly smaller than those at 3 mm, while at 20mm, the yield and energy efficiency are much smaller. In addition, it is possible to adjust the yield and energy efficiency by adjusting the liquid flow, heating temperature, etc.

The gradient distiller also includes other auxiliary facilities, such as a power source, a temperature controller, a shell insulation layer, a raw material liquid processing facility, a regulating instrument, and a valve, which belong to the prior art and are not described in detail.

The distiller and the distillation method of the present invention are mainly used for distillation and purification or concentration of liquids, such as production of distilled water, seawater desalination, salt concentration by seawater, and concentration of extracts. According to the distillation apparatus of the present invention, since the heat of condensation is relatively completely recovered, and the heat for preheating the raw material liquid mainly comes from the heat of condensation, the heat of evaporation of the liquid also substantially comes from the heat of condensation, so that a large amount of energy is saved, and meanwhile, the distillation apparatus of the present invention has the advantage of requiring no cooling water or reducing the amount of cooling water. For example, according to data of Embodiment 2, the energy efficiency reaches level 10, and the yield is 1 L/m2h.

In addition, since the distiller of the present invention can operate under a normal pressure, not only the safety is greatly improved, but also an inexpensive and corrosion-resistant polymer material or a composite material thereof can be used to replace the alloy material, which greatly reduces the cost.

### BRIEF DESCRIPTION OF DRAWINGS

FIG. 1 is a schematic structural diagram of a horizontal distiller at an evaporation surface.
FIG. 2 is a schematic structural diagram of a gradient distiller provided with a heat exchanger.

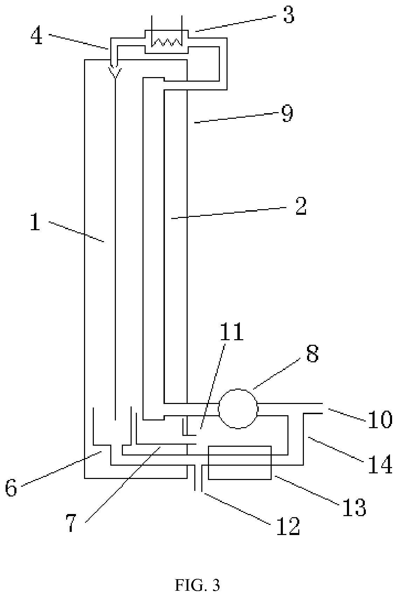

FIG. 3 is a schematic structural diagram of a distiller provided with a cooling device.

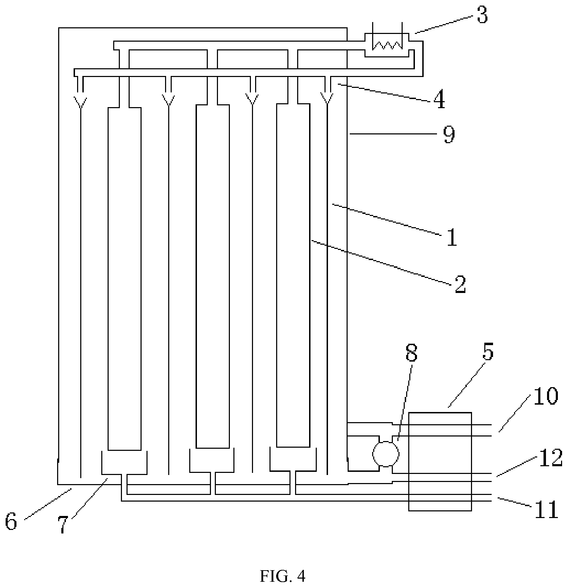

FIG. 4 is a schematic structural diagram of a distiller having a plurality of evaporation surfaces and condensation pipes.

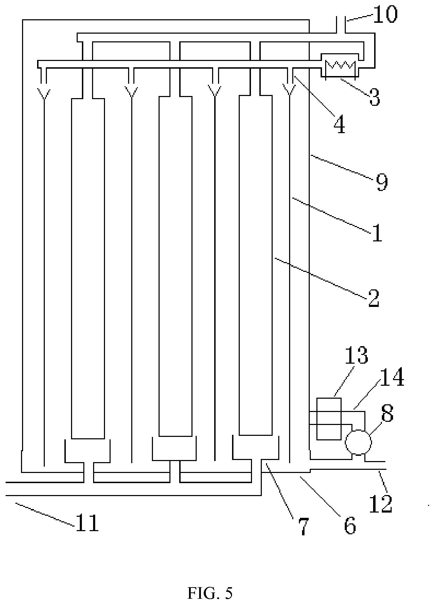

FIG. 5 is a schematic structural diagram of a distiller for processing a high-temperature liquid.
FIG. 6 is a schematic structural diagram of the condensation pipes made of a polymer material.
FIG. 7 is a schematic structural diagram of the condensation pipes made of a polymer material.

### DESCRIPTION OF EMBODIMENTS

### Embodiment 1

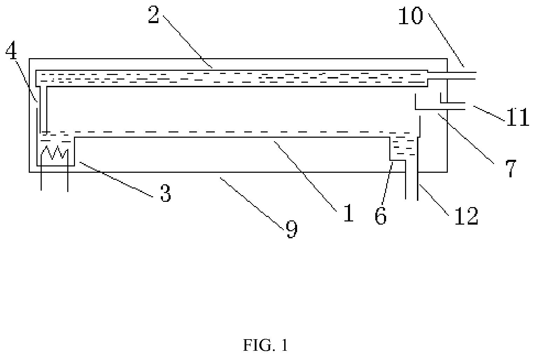

As shown in FIG. 1, a condensation pipe 2 is disposed in a shell 9 and includes 20 circular pipes of 10 mm in diameter and 500 mm in length arranged in parallel; an evaporation surface 1 is a stainless steel plate, and the distance between the evaporation surface and the condensation pipe is 30 mm. The raw material liquid enters the condensation pipe 2 from a liquid inlet 10 and flows along the condensation pipe 2; the liquid vapor condenses on a lower surface of the condensation pipe 2, and meanwhile, the heat of condensation preheats the liquid in the condensation pipe 2.The preheated liquid enters a heating device 3 through a liquid distributor 4, and is further heated in the heating device 3. The heated liquid enters the evaporation surface 1, and is distributed to flow on the evaporation surface 1 in the form of a film, and meanwhile, is continuously evaporated with the temperature of the liquid continuously decreasing, and finally enters a tail liquid trough 6 to be discharged by a tail liquid pipe 12.The liquid vapor condenses on the surface of the condensation pipe 2, and the condensate flows to one end along the condensation pipe 2 and falls into a condensate trough 7 (the left end of the condensation pipe is higher than the right end), and is discharged through a condensate pipe 11.

### Embodiment 2

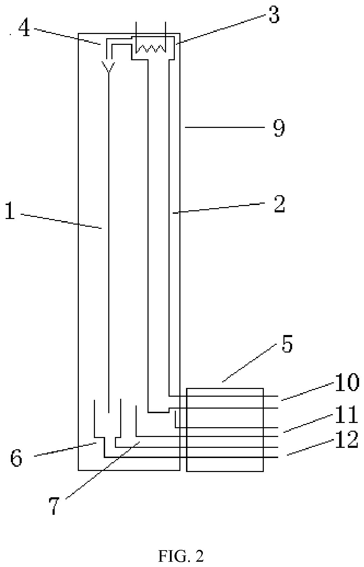

As shown in FIG. 2, the evaporation surface 1 is prepared by two layers of degreased fiberglass clothes (pores among the fiberglass cloth layers can diffuse the liquid well) and an outer frame, the distance between the evaporation surface and the condensation pipe is 7 mm, and a trough having a V-shaped cross section is disposed at the top of the evaporation surface (or the outer wall of the trough is covered with the fiberglass cloth), and the liquid enters the trough through the liquid distributor, and then overflows from a notch and falls onto the evaporation surface (or enters the evaporation surface by the fiberglass cloth of the trough wall). The condensation pipe 2 includes 20 stainless steel square pipes of 10 mm × 10 mm arranged in parallel. The raw material liquid enters a heat exchanger 5 through the liquid inlet 10, then enters the condensation pipe 2, flows along the condensation pipe 2, and is preheated in the condensation pipe 2, and meanwhile, the liquid vapor condenses on the outer surface of the condensation pipe 2.The preheated liquid enters the heating device 3 and is further heated in the heating device 3. The heated liquid enters the liquid distributor 4, is distributed by the liquid distributor 4 to the evaporation surface 1, and is distributed to flow on the evaporation surface 1 in the form of a film, and meanwhile, is continuously evaporated with the temperature of the liquid continuously decreasing, and finally enters the tail liquid trough 6, enters the heat exchanger 5 through a pipe for heat exchange with the raw material liquid in the heat exchanger 5, and finally is discharged from the tail liquid pipe 12.The liquid vapor evaporated by the evaporation surface condenses on the surface of the condensation pipe 2, and the condensate flows to one end along the condensation pipe 2 and falls into the condensate trough 7, and enters the heat exchanger 5 through the pipe for heat exchange with the raw material liquid in the heat exchanger 5, and finally is discharged from the condensate pipe 11. The heating device 3 is a liquid storage tank at the top end of the condensation pipe, and has a built-in heater; and the heating device is located in the shell 9.

### Embodiment 3

In this embodiment, a liquid cooling device 13 is disposed on a liquid circulation pipe 14 to appropriately cool the circulating liquid to increase the temperature difference between the evaporation surface and the condensation pipe, thereby increasing the evaporation and condensation speeds. Heat exchange is performed between the liquid in the cooling device 13 and the outside air or the cooling water.

The replenished raw material liquid enters the liquid circulation pipe 14 through the liquid inlet 10, enters the condensation pipe 2 with the circulating liquid, flows along the condensation pipe 2, and is preheated in the condensation pipe 2; and meanwhile, the liquid vapor condenses on the outer surface of the condensation pipe 2.The preheated liquid enters the heating device 3, and is further heated in the heating device 3. The heated liquid enters the liquid distributor 4, is distributed by the liquid distributor 4 to the evaporation surface 1, and is distributed to flow on the evaporation surface 1 in the form of a film, and is continuously evaporated with the temperature of the liquid continuously decreasing, and finally, the liquid that is not evaporated enters the tail liquid trough 6, is partially discharged by the tail liquid pipe 12, and is partially continuously evaporated to be moderately cooled in the cooling device. The liquid vapor evaporated from the evaporation surface condenses on the surface of the condensation pipe 2, and the condensate flows to one end along the condensation pipe 2 and falls into the condensate trough 7, and finally discharged from the condensate pipe 11.

### Embodiment 4

The apparatus in this embodiment includes a plurality of condensation pipes 2 having a rectangular cross section of 5 mm × 250 mm and a length of 600 mm, that is, each condensation pipe contains two condensation surfaces of 250 mm × 600 mm. The evaporation surface of250 mm × 600 mm is a 150-mesh hydrophilization-treated stainless steel mesh. The mesh is fixed and tensioned by a side frame, and the top of the evaporation surface is a V-shaped trough covered with a mesh. The evaporation surface 1 and the condensation pipe 2 are parallel to each other and arranged at intervals, and the distance therebetween is 3 mm. The heat exchanger 5 is used for heat exchange between the raw material liquid and the condensate as well as the tail liquid.

### Embodiment 5

The technical solution of this embodiment is suitable for concentrating a high-temperature extract or distilling high-temperature wastewater to obtain pure water. The high-temperature liquid is introduced from the top end and can be operated without heating the circulating liquid, or energy consumption of heating is less. It is particularly advantageous to the centration of the high-temperature extract such as a traditional Chinese medicine extract (generally extracted at a high temperature).

The replenished raw material liquid is mixed into the circulating liquid through the liquid inlet pipe 10, enters the heating device 3 together with the circulating liquid so as to be heated (or not heated) in the heating device 3, then enters the liquid distributor 4 to be distributed to the evaporation surface 1, and is evaporated and cooled on the evaporation surface 1, then flows into the tail liquid trough 6, and is partially discharged from the tail liquid pipe 12, is partially transported by a circulation pump 8 and the circulation pipe 14 through the cooling device 13 so as to be moderately cooled in the cooling device 13, and then is distributed into each condensation pipe 2 through a pipe so as to be preheated in the condensation pipe 2, and then collected by the pipe; and then the raw material liquid is added.

### Embodiment 6

Provided is a gradient sub-boiling distiller having a condensation pipe made of a polymer material or a composite material thereof (for example, polypropylene added with a thermal conductive material to enhance thermal conductivity). To save space, the overall structure is not described in detail herein, and only the condensation pipe used is described. The condensation pipe is shown in FIGS. 6 and 7. The condensation pipe is a rectangle having a length of 1,200 mm and a cross section with a length of 1,000 mm and a width of 5 mm. A liquid passage 23 is disposed at both ends of the condensation pipe. The longitudinal partition plate 15 functions to increase the strength. The holes separated by the longitudinal partition plate 15 are communicated the liquid passages 23 at both ends of the condensation pipe. The surface of the condensation pipe is provided with a columnar protrusion 16, a strip-shaped protrusion 17 having a rectangular cross section, or a strip-shaped protrusion 21 having a triangular cross section, and the height of the protrusion is 3-15 mm.Guide troughs are respectively disposed on the surface of the strip-shaped protrusion, i.e., a gap 19 and 20 between the trough 18 and the strip-shaped protrusion, and a guide trough 22 formed by a side surface of the protrusion and ridges on the side surface .The columnar protrusions may be inclined relative to the surface. When the condensation pipe is disposed vertically, the top ends of the columnar protrusions are lower than the base portion, so that the raw material liquid on the evaporation surface does not flow upward into the condensate, and the condensate generated on the columnar protrusions or the condensate flowing to the columnar protrusions from the surface of the condensation pipe also cleans the columnar protrusions and finally flows into the raw material liquid, without contaminating the condensate.The protrusions may also be longitudinal strip-shaped, for example, strips having a rectangular, semi-circular, or triangular cross section, etc., the top ends of which are in contact with and support the evaporation surface, and the base portion is connected to the surface of the condensation pipe.A guide trough inclined relative to the condensation surface is disposed on the side surface, and one end of the guide trough at the evaporation surface is lower than the end at the condensation surface.In this way, the liquid on the evaporation surface is collected into the guide trough while flowing toward the condensation surface and flows back to the evaporation surface along the guide trough, and the condensate generated on the protrusions also flows along the guide trough, and cleans the protrusions, so that the raw material liquid does not contaminate the condensate.

## Claims

1. A gradient sub-boiling distiller, comprising at least one condensation pipe, at least one evaporation surface, a heating device, a liquid distributor, a tail liquid trough, a condensate trough, a tail liquid pipe, a liquid inlet pipe, a condensate pipe, and a shell, wherein one end of the heating device is communicated with the liquid distributor, and the other end is communicated with the condensation pipe; one end of the evaporation surface is connected to the liquid distributor, and the other end is provided with the tail liquid trough; the tail liquid trough is communicated with the tail liquid pipe; one end of the condensation pipe is communicated with the liquid inlet pipe, and the other end is communicated with the heating device; and the condensate trough is located at one end of the condensation pipe and is communicated with the condensate pipe.

2. The gradient sub-boiling distiller according to claim 1, wherein the distiller further comprises a pump, and an inlet and an outlet of the pump are respectively communicated with the tail liquid pipe and the liquid inlet pipe through a circulation pipe.

3. The gradient sub-boiling distiller according to claim 1 or 2, wherein the distiller further comprises a heat exchanger disposed on the tail liquid pipe, the condensate pipe, and the liquid inlet pipe.

4. The gradient sub-boiling distiller according to claim 2, wherein the circulation pipe further comprises a cooling device.

5. The gradient sub-boiling distiller according to claim 4, wherein the liquid inlet pipe is connected to a pipe between the condensation pipe and the heating device or a pipe between the liquid distributor and the heating device.

6. The gradient sub-boiling distiller according to claim 1, wherein the distiller further comprises a device connected to the evaporation surface to periodically move the evaporation surface relative to the condensation pipe.

7. The gradient sub-boiling distiller according to claim 1, wherein the distiller further comprises a gas generator, a gas storage tank, an air extractor, or an air compressor communicated with the shell through a pipe.

8. The gradient sub-boiling distiller according to claim 1, wherein the distiller further comprises a fan, and an inlet and an outlet of the fan are communicated with the shell.

9. The gradient sub-boiling distiller according to any one of claims 1, 2, 4, 5, and 7, wherein the condensation pipe is made of a polymer material or a composite material thereof, and has a longitudinal partition plate inside; holes partitioned by the partition plate are communicated with liquid passages at both ends of the condensation pipe, and protrusions are formed on a surface of the condensation pipe; the evaporation surface and the condensation pipe are arranged at intervals; the protrusions on the surface of the condensation pipe support and compress the evaporation surface; the protrusions on the surface of the condensation pipe comprise columnar or tapered protrusions, inclined columnar or tapered protrusions, and longitudinal strip-shaped protrusions; and longitudinal strip-shaped protrusions of a guide trough, located at one end of the evaporation surface and lower than one end of the condensation surface, are formed on the side surface.

10. The gradient sub-boiling distiller according to claim 1 or 2, wherein the evaporation surface is omitted, and the raw material liquid is dripped or sprayed from the liquid distributor.
